# EUROPEAN PATENT SPECIFICATION

(11) **EP 2 338 153 B1**
(45) Date of publication and mention of the grant of the patent: **17.08.2016**
(21) Application number: 09821468.7
(22) Date of filing: 16.10.2009
(51) Int. Cl.: G09G 5/37, G09G 5/34, G06F 15/02, H04W 88/02, G06T 15/30, G06T 11/00

(54) **METHOD AND SYSTEM FOR ANTI-ALIASING CLIPPED POLYGONS AND POLYLINES**
VERFAHREN UND SYSTEM FÜR MITTELS ANTI-ALIASING ZUGESCHNITTENE POLYGONE UND POLYLINIEN
PROCÉDÉ ET SYSTÈME PERMETTANT D'ÉVITER LE CRÉNELAGE DE POLYLIGNES ET DE POLYGONES CLIPPÉS

(30) Priority: 20.10.2008 US 106846 P
(43) Date of publication of application: 29.06.2011
(73) Proprietor: BlackBerry Limited, Waterloo, ON N2K 0A7 (CA)
(72) Inventor: RAJAGOPALAN, Ramgopal, Waterloo, Ontario N2L 5Z5 (CA)
(74) Representative: Moore, Barry
(86) International application number: PCT/CA2009/001485
(87) International publication number: WO 2010/045718

(56) References cited:
- US-A- 4 731 606
- US-A1- 2005 116 966
- US-A1- 2005 270 311
- US-A1- 2006 221 077
- US-A1- 2007 263 007
- US-B1- 6 359 630
- YANYAN ZHANG ET AL: "Real-time Rendering of Large-scale Terrain in the Flight Simulator", INTEGRATION TECHNOLOGY, 2007. ICIT '07. IEEE INTERNATIONAL CONFER ENCE ON, IEEE, PI, 1 March 2007 (2007-03-01), pages 426-431, XP031127294, ISBN: 978-1-4244-1091-0
- LATHROP O ET AL: "Accurate rendering by subpixel addressing", IEEE COMPUTER GRAPHICS AND APPLICATIONS, IEEE SERVICE CENTER, NEW YORK, NY, US, vol. 10, no. 5, 1 September 1990 (1990-09-01), pages 45-53, XP011417227, ISSN: 0272-1716, DOI: 10.1109/38.59036

## Description

### TECHNICAL FIELD

The present invention relates graphics rendering. In particular, the present invention relates to a method and system for reducing aliasing artifacts introduced in fast clipping of polygons and polylines in rendering static graphic images.

### BACKGROUND DISCUSSION

Polygon and line clipping methods and algorithms are well known in the field of computer graphics. In computer graphics, clipping refers to an operation where only portions of the vector or raster image that are visible to the user are drawn. This can save processing time on parts of the image that do not fall into any visible region of the display. For 2D vector graphics data, such as polygons and lines, clipping consists of deciding which of the vector data will be completely visible, completely invisible or partially visible. For the former two cases, the system either completely draws or throws away the respective geometry and for the partially visible case, the geometry is 'cut' such that only the visible portion is drawn. For example, a line segment may be intersected with the visible boundary of the display to come up with a shorter line segment which is completely contained within the bounds of the display. Hence clipping is used to accelerate the time taken to render graphics to the display.

Well known polygon clipping methods include the Sutherland-Hodgman method of clipping a candidate polygon against a rectangular clipping window, and the Maillot or Liang-Barsky methods of clipping a polygon in relation to nine regions within a clipping plane. While these methods are effective, they still require significant computational resources and time to render each new frame. This is of particular concern in mobile devices where new and more powerful graphics applications are being deployed, and where computational resources and power usage are at a premium.

Well known line clipping methods include the Cohen-Sutherland method, in which, for rectangular windows, the four edges of the clip window are extended, and nine regions are created from their intersection, of which only the middle region (viewport) is visible. The Cohen-Sutherland method includes, excludes or partially includes lines based on the regions in which the endpoints lie. The Liang-Barsky line clipping method is another popular line clipping algorithm. It uses the parametric equation of a line and inequalities describing the range of the clipping window to determine the intersections between the line and the clipping rectangle. While these methods are effective, they still require significant computational resources and time to render each new frame. This is of particular concern in mobile devices where new and more powerful graphics applications are being deployed, and where computational resources and power usage are at a premium.

Improvements in methods and systems of clipping geometry including polygons and lines are desirable.

### BRIEF DESCRIPTION OF THE DRAWINGS

Embodiments of the present application will now be described, by way of example only, with reference to the attached Figures, wherein:
Figure 1 is a block diagram of an exemplary embodiment of a portable electronic device;

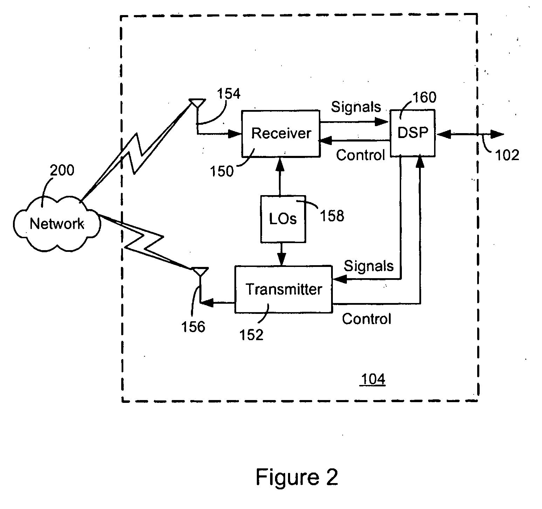

Figure 2 is an exemplary block diagram of a communication subsystem component of Figure 1;

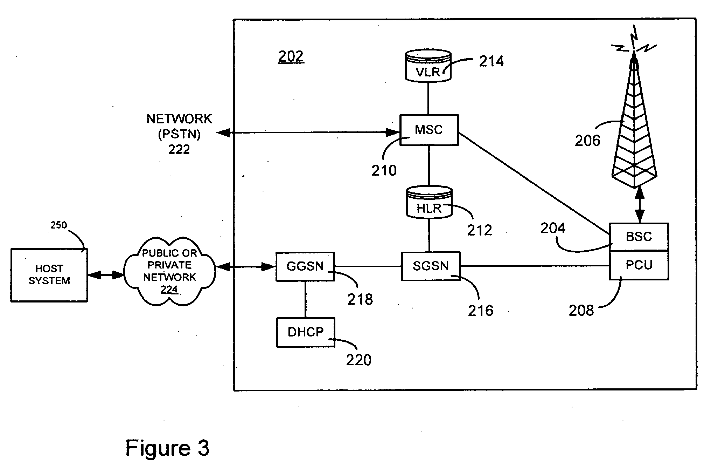

Figure 3 is a block diagram of an exemplary implementation of a node of a wireless network;

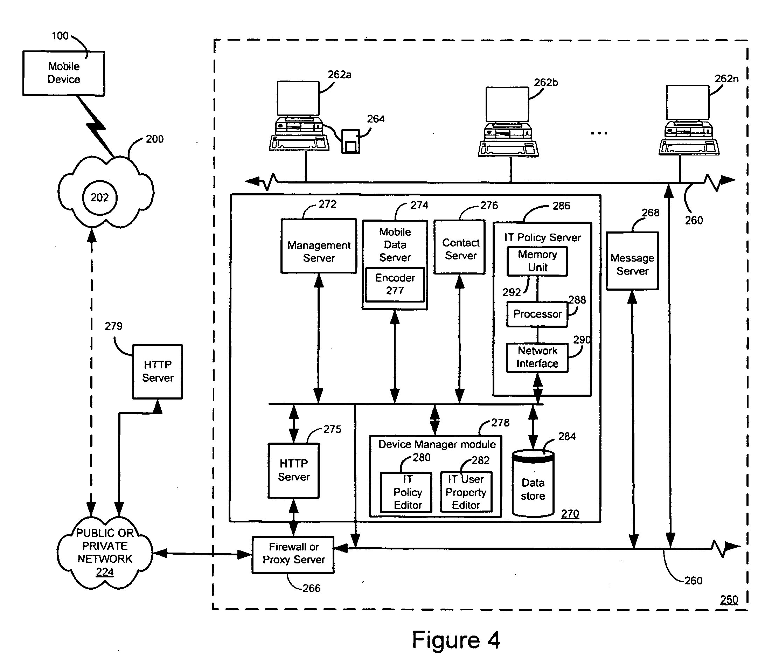

Figure 4 is a block diagram illustrating components of an exemplary configuration of a host system with which the portable electronic device can communicate;
Figure 5 is a flowchart of an exemplary method;
Figure 6 illustrates a panning operation;
Figure 7 illustrates expansion of an L-shaped region;
Figure 8 illustrates rectangular clipping of a polygon;
Figures 9 - 11 illustrate clipping a polygon against the expanded L-shaped region;
Figure 12 illustrates error introduction in a clipping operation and the reduction of the error by expansion of the region to which a geometry is clipped;
Figure 13 illustrates another panning operation;
Figure 14 illustrates expansion of an L-shaped region;
Figure 15 illustrates rectangular clipping of a polyline;
Figures 16 - 18 illustrate clipping a polyline against an L-shaped region; and
Figure 19 shows the eight cases into which clipped line segments can fall.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to portable electronic devices. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

The graphics in an application such as a map application are represented as polygons and line segments. These are rendered onto the screen with different colors and stroking schemes to display a geographic location. In such applications, a user generally pans (horizontal and/or vertical translational movement) through a vast 2-dimensional (2D) space containing the polygons and line segments or portions thereof. As the underlying polygons and line segments defining the 2D space do not change, the present method focuses on rendering only the newly exposed, or "clipped", portions.

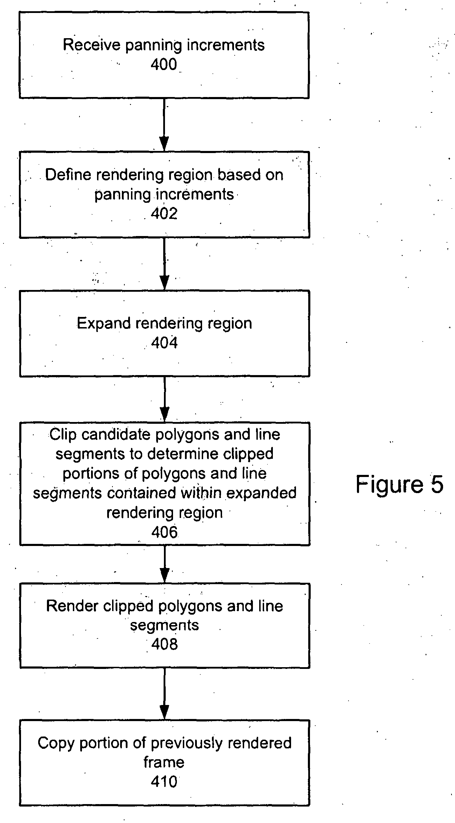

Figure 5 is a flowchart of the present method. Generally, the present method provides a method of static graphics rendering in a mobile device. As used herein, a "static" rendering application is defined as a rendering application with no animation content in the rendered scene, such as map and other geographical display applications. In other words, the rendered scene is relatively static from one image frame to the next frame, and there are no moving objects in the scene. Panning increments are received for panning a previously rendered frame to a panned frame (step 400). As used herein, "panning" refers to the action of scanning across an image on a display of the mobile device 100. Panning across an image results in translation of the image in the horizontal and/or vertical directions, and may result in the display of previously hidden portions of the image. "Panning increments" refer to the incremental changes in the horizontal and/or vertical coordinates of the image resulting from the panning operation.

A rendering region is then defined based on the panning increments (step 402). The "rendering region" is a generally L-shaped region in the 2D plane, also referred to herein as the L-region, that includes only the portion of the image that was previously unrendered. The L-shaped region has inner horizontal and vertical boundaries that are collinear with respective horizontal and vertical boundaries of the previously rendered frame and outerboundaries collinear with respective horizontal and vertical boundaries of the panned frame.

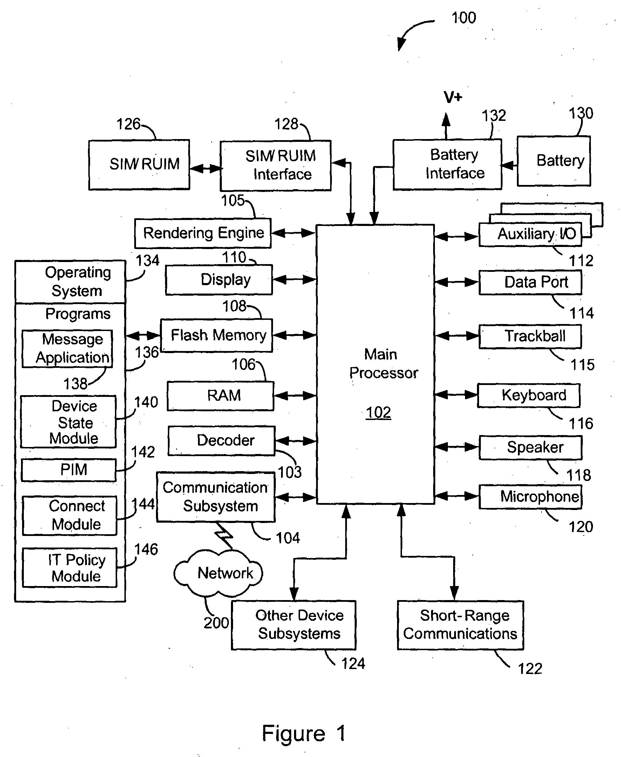

The rendering region is expanded in all directions to provide an expanded region (step 404). An expanded region is created, for example, by moving each of the bounding lines of the rendering region outwardly, with each line moved in a direction perpendicular to the respective line. The amount in pixel or screen units by which the bounding lines are moved is referred to herein as the "overdraw width". For the purpose of this example, the same overdraw width is utilized for each of the bounding lines. The overdraw width may vary for the bounding lines, however.. A candidate polygon is then clipped against the expanded region to create zero or many clipped polygons within the rendering region (step 406). A candidate polyline or line segment is then clipped against the expanded region to create zero or many clipped line segments (step 406). The clipped polygons and line segments can then be rendered (step 408), and a portion of the previously rendered frame can be copied (step 410), to provide the panned frame. The method can be performed by the rendering engine 105, shown in Figure 1.

Embodiments of the present method can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention can also be stored on the machine-readable medium. Software running from the machine-readable medium can interface with circuitry to perform the described tasks.

The clipping of geometry including polylines and polygons includes the determination of the intersection of line segments contained within the L-shaped region. The intersection point of line segments that intersect with the L-shaped region boundaries is computed and used for rendering of shapes. The computation of the intersection point is based on an integer space in that the intersection points are rounded to the nearest integer. Thus, a computed intersection point may not lie on the actual line segment. Since the clipping of geometry is carried out for L-region rendering using computed intersection points that may not lie on the actual line segments, an intersection error may be introduced each time a new L-region is rendered and a portion of the previous frame copied over to the new frame which can result in aliasing artifacts in the form of choppy line-segments. The intersection error is 0 for horizontal and vertical lines while the error is maximum for a line with a slope of absolute value of 1. The present method reduces aliasing effects introduced in such graphics rendering by expanding the L-region, for example, expanding in each direction, prior to copying over the bitmap of the previously rendered frame and determining intersection points based on the expanded L-region. With an overdraw width of 20 pixel units, for example, aliasing artifacts can be reduced by over 35%, which is negligibly detected by the human eye.

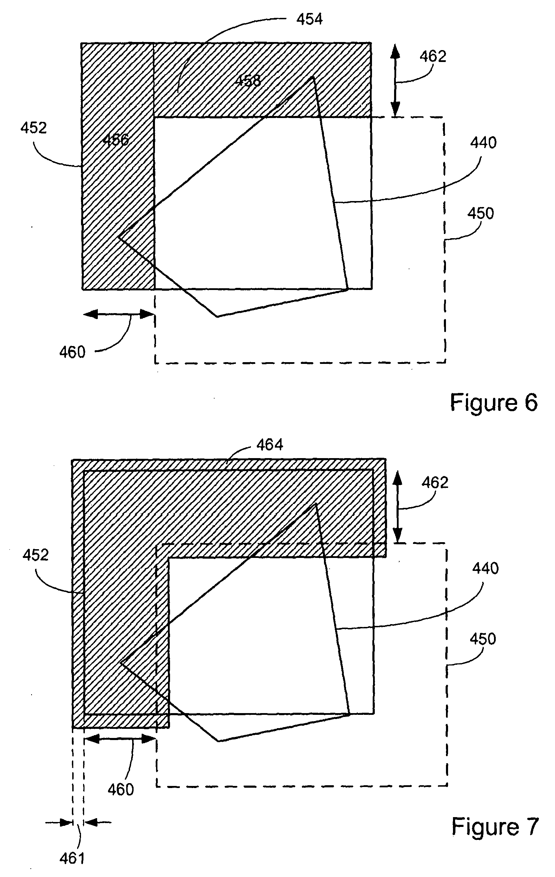

Embodiments of the present method will now be described with reference to Figures 6 - 10. Figure 6 shows a candidate polygon 440 over which a user can pan a frame. The panning operation results in a previously rendered frame 450 being shifted to a desired new view, as indicated by the panned frame 452. The panning operation can consist of a vertical pan, followed optionally by a horizontal pan, or vice versa, or can consist of simultaneous movement in both horizontal and vertical directions. A resultant rendering region, shown as shaded L-region 454, is defined by the panning operation.

The L-region 454 is by definition two rectangles, as shown, that combine to give the shape of an "L" on the screen. Each rectangle 456, 458 represents a refresh region of the screen display, and is defined by the horizontal and vertical panning increments, indicated by the arrows 460 and 462.

Once the user performs the panning operation, the horizontal and vertical panning increments are captured or received (step 400), and are used to compute the L-region 454, which represents the effective refresh region on the screen (step 402).

The computed L-region 454 is then expanded by moving each of the 6 boundaries or sides defining the L-region 454 uniformly outwardly by a predetermined number of pixels and extending each of the six line segments to meet at corners of the expanded L-region 464, as shown in Figure 7 (step 404). For example, each of the sides can be moved 20 pixels outwardly, as illustrated by the overdraw width 461, and the sides are extended to provide the expanded L-region 464.

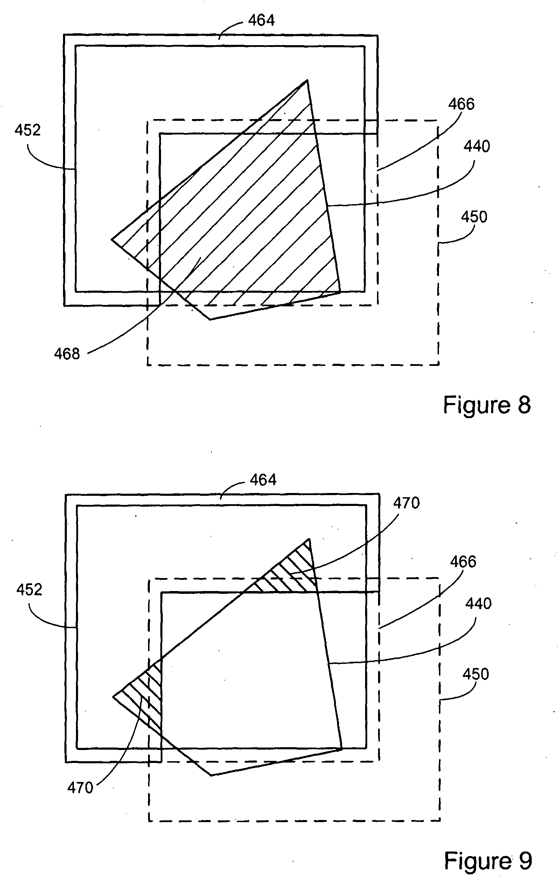

To clip the polygon 440 in accordance with the expanded L-region 464 (step 406), a conventional rectangular clipping method, such as the Sutherland-Hodgman method, is applied to the polygon 440. This step is illustrated in Figure 8, where the. expanded L-region 464 defines the boundaries of the rectangular clipping window 466 used in the rectangular clipping operation. It should be noted that the bounds of the rectangular clipping window conform to the outer edges of the expanded L-region 464. The clipped polygon resulting from the rectangular clipping operation is shown by the hashed region 468 within the candidate polygon 440.

Once the polygon 440 is clipped to the rectangular clipping window 466, the resulting clipped polygon(s) 468 are in turn each clipped against the expanded L-region 464 to compute a set of L-region clipped polygon(s) 470, as shown shaded in Figure 9. Once the set of expanded L-region clipped polygons 470 has been rendered (step 408), the portion of the previously rendered frame 450 that overlaps with the panned frame 452 can be derived or copied from the previously rendered frame 450, and added to the panned frame 450 (step 410). Thus, the portion of the previously rendered frame 450 that is added includes a portion that overlaps with and is rendered over a portion of the expanded L-region 464. This in effect reduces the total rendering needs of the refresh operation to the expanded L-region 464. With a portion of the previously rendered screen 450 rendered over the portion of the expanded L-region 464, the aliasing artifacts are reduced. The greater the overlap with the expanded L-region 464, the lesser the aliasing artifacts.

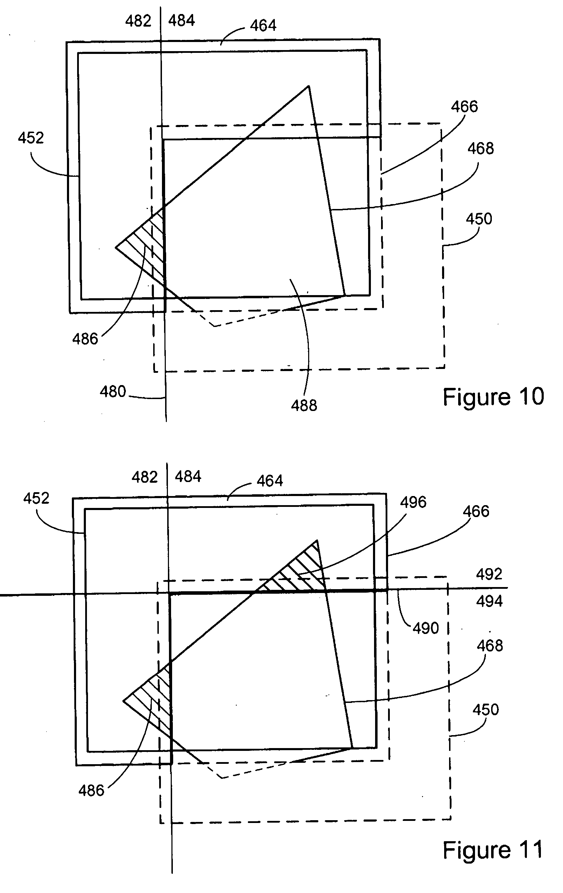

One embodiment for clipping the polygon(s) 468 against the expanded L-region 464 is shown in Figures 10 and 11. After the rectangular clipping operation against the rectangular clipping window 466 that includes the expanded L-region 464, the clipped polygon 468 is subjected to two consecutive operations. In the first operation, illustrated in Figure 10, the clipped polygon is first split with respect to the vertical interior axis 480 of the expanded L-region 464. The axis 480 is extended to divide the 2D plane into two half-planes 482 and 484, and the clipped polygon 468 is split into two split polygons 486 and 488. That portion of the clipped polygon 468 that lies on the side of the axis within the expanded L-region 464 (i.e. split polygon 486) is retained or accepted for rendering, and can be rendered immediately without further clipping. That portion which lies to the other side of the axis (i.e. split polygon 488) is further processed, as described below.

The split polygons that come to the right side of the vertical axis 480 after the split operation, such as split polygon 488, may still lie at least partially within the expanded L-Region, namely to the right of the axis 480, in the half plane 484 and above the axis 490. Hence, a further clipping operation is performed on the non-accepted split polygon 488, as shown in Figure 11. This clipping operation is performed with respect to the interior horizontal axis 490 of the expanded L-region 464. The horizontal interior axis 490 is taken and extended to form a line which divides the 2D plane into two planes 492 and 494. The non-accepted split polygon 488 is clipped against the line 490. A polygon is said to be clipped with respect to a line when it is split with respect to the line, and the newly created polygons on one side of the line are retained or accepted, and those on the other are rejected and discarded. In the illustrated example, the clipped polygon 496 above the line 490, that falls within the expanded L-region 464, is retained for rendering, and the portion of split polygon that falls below line 490 is discarded.

As will be appreciated, with these steps, a polygon can be clipped against the expanded L-shaped region, and only those portions of the polygon that fall within the expanded L-shaped region are retained for rendering. The expanded L-region is a fraction of the total area of the display. Thus, rendering of polygons can be substantially accelerated when compared to other methods that clip polygons against boundaries of the panned frame, and render the newly clipped polygon. Each clipping operation includes the determination of the intersection of line segments contained within the expanded L-shaped region. The intersection point of line segments that intersect with the expanded L-shaped region boundaries is computed and used for rendering of shapes. While polygons are clipped against the expanded L-shaped region, portions of which are not rendered on the display or are copied over, aliasing artifacts are reduced as compared to rendering based on clipping against the L-region without expanding.

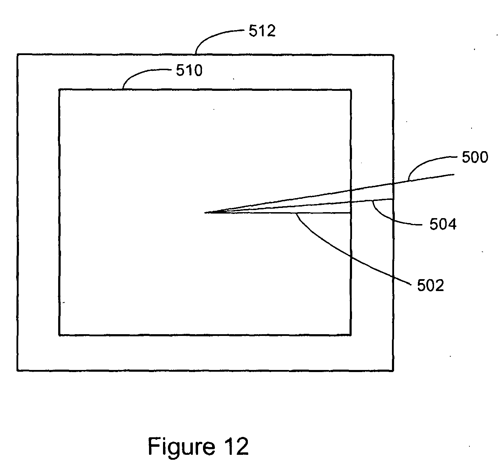

Expanding the L-shaped region against which polygons and polylines are clipped, decreases the aliasing artifacts by decreasing the error introduced in determining intersection points when clipping. Referring to Figure 12, an exemplary line 500 is shown which may be a line segment or a portion of a polygon for clipping. When determining the intersection point of the line 500 with the interior boundary 510 for clipping, the actual intersection point may be, for example, at a pixel co-ordinate position of (3,4.5). Since the intersection point is rounded to the nearest integer, the calculated intersection point with the interior boundary 510 is (3,4), as shown by the line 502. Using an expanded boundary 512 and determining the intersection point of the line 500 with the expanded boundary 512, the line segment 504 may be determined based on the rounded intersection point to provide the line 504. The line 504 when clipped to the expanded boundary 512 provides a line that is much closer to the actual line 500 when rendered.

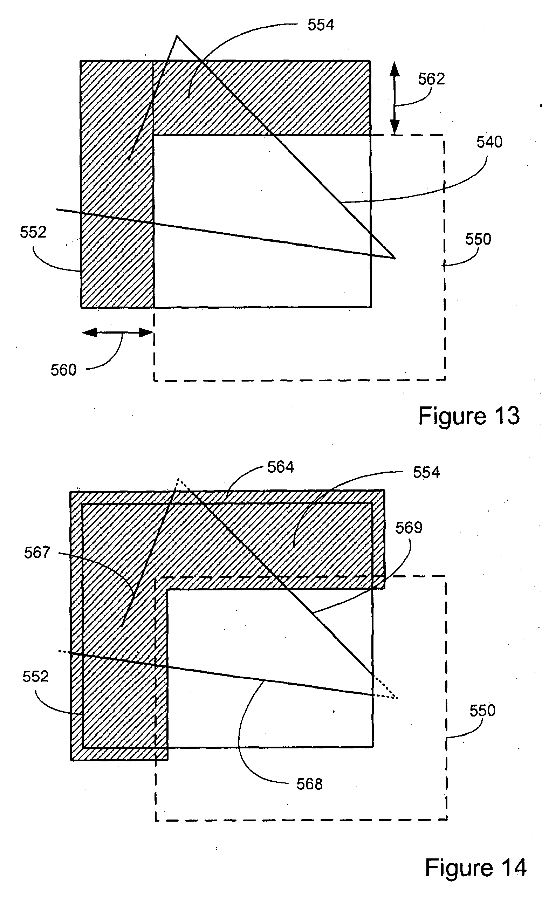

Further embodiments of the present method will now be described with reference to Figures 13 - 19. Figure 13 shows a candidate polyline 540 over which a user can pan a frame. The panning operation results in a previously rendered frame 550 being shifted to a desired new view, as indicated by the panned frame 552. The panning operation can consist of a vertical pan, followed optionally by a horizontal pan, or vice versa, or can consist of simultaneous movement in both horizontal and vertical directions. A resultant rendering region, shown as shaded L-region 554, is defined by the panning operation.

As described above, the L-region 554 is by definition two rectangles, as shown, that combine to give the shape of an "L" on the screen and is defined by the horizontal and vertical panning increments, indicated by the arrows 560 and 562.

Once the user performs the panning operation, the horizontal and vertical panning increments are captured or received (step 400), and are used to compute the L-region 554, which represents the effective refresh region on the screen (step 402).

The computed L-region 554 is then expanded by moving each of the 6 boundaries or sides defining the L-region 554 uniformly outwardly by a predetermined number of pixels and extending each of the sides to meet at respective corners of the expanded L-region 564, as shown in Figure 14 (step 404).

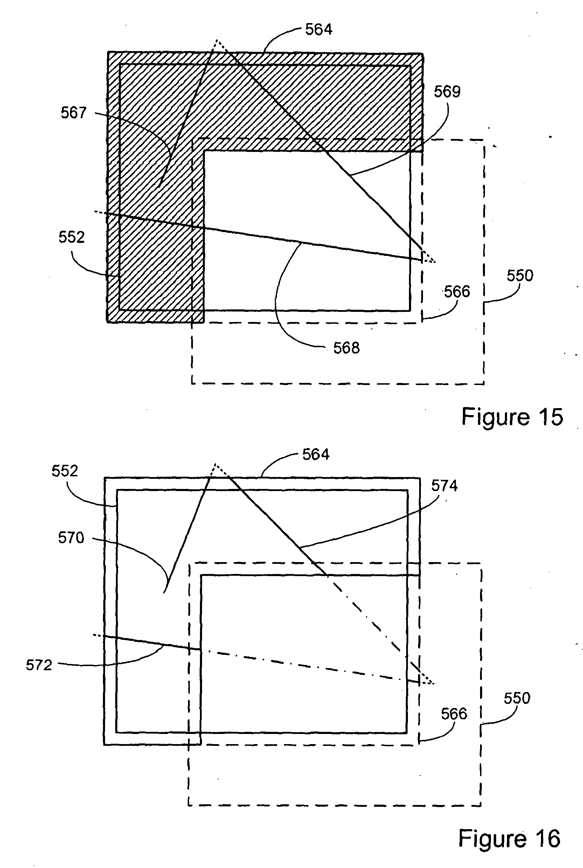

To clip the polyline 540 in accordance with the expanded L-region 554, a conventional rectangular line clipping method, such as the Cohen-Sutherland method, is applied to the polygon 540 of Figure 13. This step is illustrated in Figure 15, where the expanded L-region 564 defines the boundaries of the rectangular clipping window 566 used in the line clipping operation. It should be noted that the bounds of the rectangular clipping window 466 conform to the outer edges of the expanded L-region 564. The clipped line segments resulting from the clipping operation are shown by the clipped line segments 567, 568, 569.

Once the polyline 540 is clipped to the rectangular clipping window 466, the resulting clipped line segments 567, 568, 569 are in turn each clipped against the expanded L-region 564 to compute a set of expanded L-region clipped line segments 570, 572, 574, as shown in Figure 16. The expanded L-region clipped line segments 570, 572, 574 represent the minimum number of screen pixels requiring a refresh to view the polyline 540 in the panned frame 552. As will be appreciated, once the set of expanded L-region clipped line segments 570, 572, 574 has been rendered, the portion of the previously rendered frame 550 that overlaps with the panned frame 552 can be derived or copied from the previously rendered frame 550, and added to the panned frame 550 (step 410). Thus, the portion of the previously rendered frame 550 that is added includes a portion that overlaps with and is rendered over a portion of the expanded L-region 564. The method described reduces the total rendering needs of the refresh operation to the expanded L-region 564. With a portion of the previously rendered screen 550 rendered over the portion of the expanded L-region 564, the aliasing artifacts are reduced. The greater the overlap with the expanded L-region 564, the lesser the aliasing artifacts.

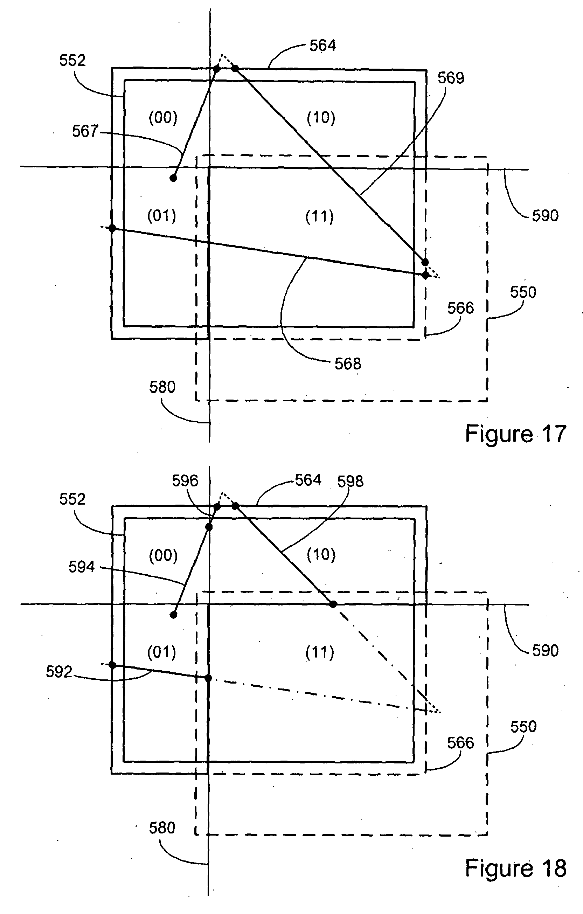

One embodiment for clipping the line segments 567, 568, 569 against the expanded L-region 554 will now be described with reference to Figures 17 and 18. For clipping line segments 567, 568, 569 to the expanded L-region 564, the 2D plane is first divided into four quadrants, and codes are assigned to each quadrant. A code is then computed for each end point of the candidate line segments 567, 568, 569. The computed codes permit each line segment 567, 568, 569 to be categorized as line segments intersecting with the expanded L-region boundaries; completely within the expanded L-region boundaries; or completely outside the expanded L-region boundaries. Line segments falling completely within or completely outside the expanded L-region can then be trivially accepted or rejected, respectively, for rendering.

To divide the 2D plane into quadrants or regions, the vertical and horizontal interior line segments 580 and 590 forming the expanded L-region are extended, and codes (00), (01), (11) and (10) are assigned to the respective regions. The first digit in the code represents the vertical component V, and the second digit represents the horizontal component H. The codes are assigned to the regions such that those regions falling within the expanded L-region 564 with respect to the vertical line 580 are assigned a vertical component of "0", and those falling outside the expanded L-region 564 with respect to the vertical line 580 are assigned a vertical component of "1". Similarly, horizontal components of the region codes are assigned such that those regions falling within the expanded L-region 564 with respect to the horizontal line 590 are assigned a horizontal component of "0", and those falling outside the expanded L-region 564 with respect to the horizontal line 590 are assigned a horizontal component of "1".

Codes are then computed for each endpoint of the candidate line segments 567, 568, 569. In the illustrated example shown in Figure 9, the codes computed for the endpoints of line segment 567, 568, 569 are [P1(01), P2(10)]; [P1(01), P2(11)] and [P1(10), P2(11)], respectively. Once the VH codes are assigned to all the end points of the candidate line segments, each line segment is examined to first determine if it can be trivially accepted or rejected.

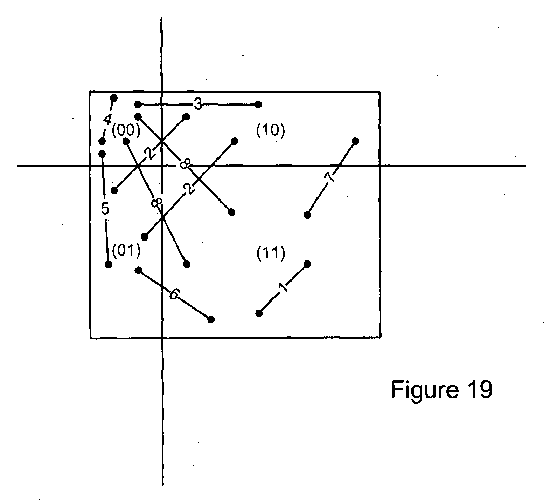

As shown in Figure 19, there are eight distinct cases for classifying a line segment. Each of these eight cases is shown by its respectively numbered line in Figure 11:
**Class 1:** P1 (11) and P2 (11). This implies that both the points are outside the expanded LRegion.
**Class 2:** P1 (01) and P2 (10). This implies that P1 lies outside the horizontal region but inside the vertical region and vice versa for P2. This case has two subcases-
   a. The line segment lies completely within the expanded L-region.
   b. The line segment P1 P2 intersects the expanded L-region boundaries.
**Class 3:** P1 (00) and P2 (10). This implies that P1 is inside both the vertical and horizontal regions and P2 inside the horizontal region, which in turn means that the line segment is completely within the expanded L-region.
**Class 4:** P1 (00) and P2 (00). This implies that both P1 and P2 are inside both the vertical and horizontal regions hence the line segment is also completely within the expanded L-region.
**Class 5:** P1 (01) and P2 (00). This case is similar to case 3. The line segment is contained completely within the expanded L-region by virtue of the containment of P1 and P2 inside the vertical region.
**Class 6:** P1 (01) and P2 (11). This case implies that P1 is contained inside the vertical region and P2 outside the expanded L-region and hence the line segment P1 P2 intersects the expanded L-region at the vertical boundary.
**Class 7:** P1 (10) and P2 (11). This case implies that P1 is contained inside the horizontal region and P2 outside the expanded L-region and hence the line segment P1 P2 intersects the expanded L-region at the horizontal boundary.
**Class 8:** P1 (00) and P2 (11). This case implies that P1 is contained inside the horizontal as well as the vertical region and P2 outside both and hence the line segment P1 P2 intersects the expanded L-region at either the horizontal or the vertical boundary. This case can also be considered a sub-class of classes 7 and 8.

A line segment classified as belonging Class 1 can be trivially rejected, and line segments classified as belonging to Classes 3, 4 or 5 can be trivially accepted for rendering. Line segments classified in the remaining classes require further processing to determine the portion required to be rendered or refreshed.

As can be seen from the illustrated example, line segments 567, 568, 569 are classified in Classes 2, 6 and 7, respectively. Hence, further clipping operations are performed on the each of the line segments, as shown in Figure 18. The line segments 567, 568, 569 are first clipped with respect to the vertical line 480 of the expanded L-region 564. A line segment is said to be clipped with respect to a line when it is split with respect to the line, and the newly created line segments on one side of the line are retained or accepted. Those portions of the line segments 567, 568, 569 that lie on the side of the line 480 within the expanded L-region 564 (i.e. clipped line segments 592 and 594) can be retained or accepted for rendering, and can be rendered immediately without further clipping. Those portions which lie to the other side of the line 590 are further processed by performing another clipping operation with respect to the interior horizontal line 590 of the expanded L-region 564, discarding those newly clipped line segments that fall outside the expanded L-region 564 and retaining or accepting those that fall within the expanded L-region 564. In the illustrated example, this results in further accepting newly clipped line segments 596 and 598.

A method for rendering static graphics in a mobile device in applications such as map applications is provided. Panning increments are received for panning a previously rendered frame to a panned frame. A rendering region is defined based on the panning increments and the rendering region is expanded to provide an expanded region. At least one of a candidate polygon, candidate line segment, and polyline is clipped to the expanded region to obtain one or more clipped portions of the at least one of the candidate polygon, candidate line segment and candidate polyline contained within the expanded region. The one or more clipped portions of the candidate polygon, candidate line segment and candidate polyline, are rendered and portion of the previously rendered frame is copied to provide the panned frame.

A mobile device includes a rendering engine for performing the above method.

A computer readable medium has computer-readable code embodied therein. The computer-readable code is executable by at least one processor at a computing device to cause the at least one processor to receive panning increments for panning a previously rendered frame to a panned frame, define a rendering region based on the panning increments, expand the rendering region to provide an expanded region, clip, to the expanded region, at least one of a candidate polygon, candidate line segment and candidate polyline to obtain one or more clipped portions of the at least one of the candidate polygon, candidate line segment and candidate polyline contained within the expanded region, and render the one or more clipped portions of the candidate polygon, candidate line segment and candidate polyline, and copy a portion of the previously rendered frame, to provide the panned frame.

As indicated above, lines and polylines are clipped against the expanded L-shaped region. Although portions of the lines and polylines are not rendered on the display or are copied over, aliasing artifacts are reduced as compared to rendering based on clipping against the L-region without expanding. Expanding the L-shaped region against which polygons, lines and polylines are clipped, decreases the aliasing artifacts by decreasing the error introduced in determining intersection points when clipping.

## Claims

1. A method of static graphics rendering in a mobile device, comprising:
receiving panning increments for panning a previously rendered frame to a panned frame;
determining a rendering region based on the panning increments;
expanding the rendering region to provide an expanded region;
clipping, to the expanded region, at least one of a candidate polygon, candidate line segment and candidate polyline to obtain one or more clipped portions of the at least one of the candidate polygon, candidate line segment and candidate polyline contained within the expanded region; and
rendering the one or more clipped portions of the candidate polygon, candidate line segment and candidate polyline, and copying a portion of the previously rendered frame, a portion of which overlaps with and is rendered over a portion of the expanded region, to provide the panned frame.

2. The method according to claim 1, wherein expanding the rendering region comprises expanding the rendering region in all directions.

3. The method according to claim 2, wherein expanding the rendering region in all directions comprises expanding the rendering region uniformly in all directions.

4. The method according to claim 1, wherein the panning increments comprise horizontal and vertical panning increments.

5. The method according to claim 4, wherein determining the rendering region comprises determining an L-shaped region having inner horizontal and vertical boundaries collinear with respective horizontal and vertical boundaries of the previously rendered frame and outer boundaries collinear with respective horizontal and vertical boundaries of the panned frame.

6. The method according to claim 5, wherein expanding the rendering region comprises moving each of the six line segments comprising boundaries of the L-shaped region, outwardly from the L-shaped region, and extending each of the six line segments to meet at corners of the expanded region.

7. The method according to claim 6, wherein moving each of the six boundaries comprises moving each of six boundaries of the L-shaped region by a predetermined number of pixels.

8. A mobile device comprising a rendering engine adapted to perform the method of any preceding claim.

9. A computer readable medium having computer-readable code embodied therein, the computer-readable code executable by at least one processor at a computing device to cause the at least one processor to:
receive panning increments for panning a previously rendered frame to a panned frame;
define a rendering region based on the panning increments;
expand the rendering region to provide an expanded region;
clip, to the expanded region, at least one of a candidate polygon, candidate line segment and candidate polyline to obtain one or more clipped portions of the at least one of the candidate polygon, candidate line segment and candidate polyline contained within the expanded region; and
render the one or more clipped portions of the candidate polygon, candidate line segment and candidate polyline, and copy a portion of the previously rendered frame, a portion of which overlaps with and is rendered over a portion of the expanded region to provide the panned frame.

10. The computer-readable medium according to claim 9, wherein expanding the rendering region comprises expanding the rendering region in all directions.

11. The computer readable medium according to claim 10, wherein expanding the rendering region in all directions comprises expanding the rendering region uniformly in all directions.

12. The computer readable medium according to claim 9, wherein the panning increments comprise horizontal and vertical panning increments.

13. The computer readable medium according to claim 12, wherein determining the rendering region comprises determining an L-shaped region having inner horizontal and vertical boundaries collinear with respective horizontal and vertical boundaries of the previously rendered frame and outer boundaries collinear with respective horizontal and vertical boundaries of the panned frame.

14. The computer readable medium according to claim 13, wherein expanding the rendering region comprises moving each of the six line segments, comprising boundaries of the L-shaped region, outwardly from the L-shaped region, and extending each of the six line segments to meet at corners of the expanded region.

15. The computer readable medium according to claim 14, wherein moving each of the six boundaries comprises moving each of six boundaries of the L-shaped region by a predetermined number of pixels.

## Patentansprüche

1. Ein Verfahren zum Widergeben von statischen Grafiken in einer mobilen Vorrichtung, umfassend:
Erhalten von Schwenkinkrementen zum Schwenken eines zuvor wiedergegebenen Rahmens auf einen geschwenkten Rahmen;
Bestimmen einer Wiedergaberegion basierend auf den Schwenkinkrementen;
Expandieren der Wiedergaberegion, um eine expandierte Region bereitzustellen;
Begrenzen, bezüglich der expandierten Region, von zumindest einem aus einem Kandidatenpolygon, einem Kandidatenlinienabschnitt und einer Kandidatenpolylinie, um einen oder mehrere begrenzte Teile aus zumindest einem aus dem Kandidatenpolygon, dem Kandidatenlinienabschnitt und der Kandidatenpolylinie zu erhalten, die in der expandierten Region enthalten sind; und
Wiedergeben der einen oder mehreren begrenzter Teile des Kandidatenpolygons, des Kandidatenlinienabschnitts und der Kandidatenpolylinie und Kopieren eines Teils des zuvor wiedergegebenen Rahmens, ein Teil davon überlappend mit einem Teil der expandierten Region und darüber wiedergegeben, um den geschwenkten Rahmen bereitzustellen.

2. Das Verfahren nach Anspruch 1, wobei das Expandieren der Wiedergaberegion ein Expandieren der Wiedergaberegion in alle Richtungen umfasst.

3. Das Verfahren nach Anspruch 2, wobei das Expandieren der Wiedergaberegion in alle Richtungen ein gleichförmiges Expandieren der Wiedergaberegion in alle Richtungen umfasst.

4. Das Verfahren nach Anspruch 1, wobei die Schwenkinkremente horizontale und vertikale Schwenkinkremente umfassen.

5. Das Verfahren nach Anspruch 4, wobei das Bestimmen der Wiedergaberegion ein Bestimmen einer L-förmigen Region mit inneren horizontalen und vertikalen Begrenzungen umfasst, die kollinear sind bezüglich jeweiliger horizontaler und vertikaler Begrenzungen des zuvor wiedergegebenen Rahmens, und mit äußeren Begrenzungen, die kollinear sind mit jeweiligen horizontalen und vertikalen Begrenzungen des geschwenkten Rahmens.

6. Das Verfahren nach Anspruch 5, wobei das Expandieren der Wiedergaberegion ein Bewegen jedes der sechs Linienabschnitte umfasst, die Begrenzungen der L-förmigen Region umfassen, nach außen von der L-förmigen Region und ein Ausdehnen jedes der sechs Linienabschnitte, um an den Ecken der expandierten Region aufeinander zutreffen.

7. Das Verfahren nach Anspruch 6, wobei das Bewegen jeder der sechs Begrenzungen ein Bewegen jeder der sechs Begrenzungen der L-förmigen Regionen umfasst, um eine vorbestimmte Anzahl von Pixeln.

8. Eine mobile Vorrichtung, die eine Wiedergabemaschine umfasst, die angepasst ist, um das Verfahren nach einem der vorigen Ansprüche durchzuführen.

9. Ein computerlesbares Medion mit darauf verkörperten computerlesbaren Code, wobei der computerlesbare Code durch zumindest einen Prozessor an einer Rechnervorrichtung ausführbar ist, um den zumindest einen Prozessor zu veranlassen:
Schwenkinkremente zu erhalten zum Schwenken eines zuvor wiedergegebenen Rahmens an einen geschwenkten Rahmen;
eine Wiedergaberegion zu definieren basierend auf den Schwenkinkrementen;
die Wiedergaberegion zu expandieren, um eine expandierte Region bereitzustellen;
bezüglich der expandierten Region zumindest eines aus einem Kandidatenpolygon, einem Kandidatenlinienabschnitt und einer Kandidatenpolylinie zu begrenzen, um einen oder mehrere begrenzte Teile aus dem zumindest einen Kandidatenpolygon, dem Kandidatenlinienabschnitt der Kandidatenpolylinie zu erhalten, die in der expandierten Region enthalten sind; und
die einen oder mehreren begrenzten Teile des Kandidatenpolygons, des Kandidatenlinienabschnitts und der Kandidatenpolylinie wiederzugeben und einen Teil des zuvor wiedergegebenen Rahmens zu kopieren, ein Teil davon überlappend mit einem Teil der expandierten Region und darüber wiedergegeben, um den geschwenkten Rahmen bereitzustellen.

10. Das computerlesbare Medium nach Anspruch 9, wobei das Expandieren der Wiedergaberegion ein Expandieren der Wiedergaberegion in alle Richtungen umfasst.

11. Das computerlesbare Medium nach Anspruch 10, wobei das Expandieren der Wiedergaberegion in alle Richtungen ein gleichförmiges Expandieren der Wiedergaberegion in alle Richtungen umfasst.

12. Das computerlesbare Medium nach Anspruch 9, wobei die Schwenkinkremente horizontale und vertikale Schwenkinkremente umfassen.

13. Das computerlesbare Medium nach Anspruch 12, wobei das Bestimmen der Wiedergaberegion ein Bestimmen einer L-förmigen Region mit inneren horizontalen und vertikalen Begrenzungen umfasst, die kollinear sind mit jeweiligen horizontalen und vertikalen Begrenzungen des zuvor wiedergegebenen Rahmens, und mit äußeren Begrenzungen, die kollinear sind zu jeweiligen horizontalen und vertikalen Begrenzungen des geschwenkten Rahmens.

14. Das computerlesbare Medium nach Anspruch 13, wobei das Expandieren der Wiedergaberegion ein Bewegen jedes der sechs Linienabschnitte umfasst, die Begrenzungen der L-förmigen Region umfassen, nach außen von der L-förmigen Region und ein Ausdehnen jedes der sechs Linienabschnitte, um an den Ecken der expandierten Region aufeinander zutreffen.

15. Das computerlesbare Medium nach Anspruch 14, wobei das Bewegen jeder der sechs Begrenzungen ein Bewegen jeder der sechs Begrenzungen der L-förmigen Region um eine vorbestimmte Anzahl von Pixeln umfasst.

## Revendications

1. Procédé de rendu de graphiques statiques dans un dispositif mobile, comprenant :
la réception d'incréments de panoramique pour panoramiquer une trame rendue précédemment à une trame panoramiquée ;
la détermination d'une région de rendu sur la base des incréments de panoramique ;
l'expansion de la région de rendu pour fournir une région expansée ;
le découpage, à la région expansée, d'au moins un parmi un polygone candidat, un segment de ligne candidat et une polyligne candidate pour obtenir une ou plusieurs parties découpées du au moins un parmi le polygone candidat, le segment de ligne candidat et la polyligne candidate contenu à l'intérieur de la région expansée ; et
le rendu des une ou plusieurs parties découpées du polygone candidat, du segment de ligne candidat et de la polyligne candidate, et la copie d'une partie de la trame rendue précédemment, dont une partie se chevauche avec et est rendue sur une partie de la région expansée, pour fournir la trame panoramiquée.

2. Procédé selon la revendication 1, dans lequel l'expansion de la région de rendu comprend l'expansion de la région de rendu dans toutes les directions.

3. Procédé selon la revendication 2, dans lequel l'expansion de la région de rendu dans toutes les directions comprend l'expansion de la zone de rendu uniformément dans toutes les directions.

4. Procédé selon la revendication 1, dans lequel les incréments de panoramique comprennent des incréments de panoramique horizontal et vertical.

5. Procédé selon la revendication 4, dans lequel la détermination de la région de rendu comprend la détermination d'une région en forme de L ayant des limites horizontales et verticales intérieures colinéaires avec des limites horizontales et verticales respectives de la trame rendue précédemment et des limites extérieures colinéaires avec des limites horizontales et verticales respectives de la trame panoramiquée.

6. Procédé selon la revendication 5, dans lequel l'expansion de la région de rendu comprend le déplacement de chacun des six segments de ligne comprenant des limites de la région en forme de L, vers l'extérieur depuis la région en forme de L, et l'extension de chacun des six segments de ligne pour se rencontrer au niveau de coins de la région expansée.

7. Procédé selon la revendication 6, dans lequel le déplacement de chacune des six limites comprend le déplacement de chacune des six limites de la région en forme de L d'un nombre prédéterminé de pixels.

8. Dispositif mobile comprenant un moteur de rendu adapté pour effectuer le procédé de l'une quelconque des revendications précédentes.

9. Support lisible par ordinateur ayant un code lisible par ordinateur incorporé à l'intérieur, le code lisible par ordinateur exécutable par au moins un processeur au niveau d'un dispositif informatique pour amener le au moins un processeur à :
recevoir des incréments de panoramique pour panoramiquer une trame rendue précédemment à une trame panoramiquée ;
définir une région de rendu sur la base des incréments de panoramique ;
provoquer l'expansion de la région de rendu pour fournir une région expansée ;
découper, à la région expansée, au moins un parmi un polygone candidat, un segment de ligne candidat et une polyligne candidate pour obtenir une ou plusieurs parties découpées du au moins un parmi le polygone candidat, le segment de ligne candidat et la polyligne candidate contenu à l'intérieur de la région expansée ; et
rendre les une ou plusieurs parties découpées du polygone candidat, du segment de ligne candidat et de la polyligne candidate, et copier une partie de la trame rendue précédemment, dont une partie se chevauche avec et est rendue sur une partie de la région expansée, pour fournir la trame panoramiquée.

10. Support lisible par ordinateur selon la revendication 9, dans lequel l'expansion de la région de rendu comprend l'expansion de la région de rendu dans toutes les directions.

11. Support lisible par ordinateur selon la revendication 10, dans lequel l'expansion de la région de rendu dans toutes les directions comprend l'expansion de la région de rendu uniformément dans toutes les directions.

12. Support lisible par ordinateur selon la revendication 9, dans lequel les incréments de panoramique comprennent des incréments de panoramique horizontal et vertical.

13. Support lisible par ordinateur selon la revendication 12, dans lequel la détermination de la région de rendu comprend la détermination d'une région en forme de L ayant des limites horizontales et verticales intérieures colinéaires avec des limites horizontales et verticales respectives de la trame rendue précédemment et des limites extérieures colinéaires avec des limites horizontales et verticales respectives de la trame panoramiquée.

14. Support lisible par ordinateur selon la revendication 13, dans lequel l'expansion de la région de rendu comprend le déplacement de chacun des six segments de ligne, comprenant des limites de la région en forme de L, vers l'extérieur depuis la région en forme de L, et l'extension de chacun des six segments de ligne pour se rencontrer au niveau de coins de la région expansée.

15. Support lisible par ordinateur selon la revendication 14, dans lequel le déplacement de chacune des six limites comprend le déplacement de chacune des six limites de la région en forme de L d'un nombre prédéterminé de pixels.
